# EUROPÄISCHE PATENTSCHRIFT

(11) **EP 3 219 429 B1**
(45) Veröffentlichungstag und Bekanntmachung des Hinweises auf die Patenterteilung: **31.07.2019**
(21) Anmeldenummer: 16160857.5
(22) Anmeldetag: 17.03.2016
(51) Int. Cl.: B23K 26/00, B23K 26/08, B23K 26/70

(54) **WERKZEUGMASCHINE MIT EINER STANZVORRICHTUNG UND EINER LASERBEARBEITUNGSVORRICHTUNG SOWIE VERFAHREN ZUM BEARBEITEN VON WERKSTÜCKEN MITTELS EINER DERARTIGEN WERKZEUGMASCHINE**
MACHINE TOOL WITH A STAMPING DEVICE AND A LASER PROCESSING DEVICE AND METHOD FOR MACHINING WORKPIECES BY MEANS OF SUCH A MACHINE TOOL
MACHINE-OUTIL ÉQUIPÉE D'UN DISPOSITIF D'ESTAMPAGE ET D'UN DISPOSITIF D'USINAGE LASER ET PROCÉDÉ D'USINAGE DE PIÈCES À L'AIDE D'UNE TELLE MACHINE-OUTIL

(43) Veröffentlichungstag der Anmeldung: 20.09.2017
(73) Patentinhaber: TRUMPF Werkzeugmaschinen GmbH + Co. KG, 71254 Ditzingen (DE)
(72) Erfinder: TRÄNKLEIN, Dennis, 71154 Nufringen (DE)
(74) Vertreter: Kohler Schmid Möbus Patentanwälte

(56) Entgegenhaltungen:
- EP-A1- 2 468 449
- EP-A2- 0 158 866
- DE-U1-202009 013 899
- US-B2- 7 745 756

## Beschreibung

Die Erfindung betrifft eine Werkzeugmaschine zum Bearbeiten von Werkstücken, insbesondere von Blechen, mit einer Stanzvorrichtung sowie mit einer Laserbearbeitungsvorrichtung, wobei die Stanzvorrichtung eine stanzseitige Stellvorrichtung umfasst, welche einen Stanzwerkzeugteil eines Stanzwerkzeugs längs einer Arbeitshubachse der Stanzvorrichtung in eine definierte Position zustellt, wobei die Laserbearbeitungsvorrichtung eine Laserbearbeitungseinheit sowie eine Laser-Zusatzeinheit aufweist und wobei eine Zusatzeinheit-Stellvorrichtung die Laser-Zusatzeinheit mit einer Aktivierungsbewegung in eine definierte Funktionsstellung zustellt.

Die Erfindung betrifft außerdem ein Verfahren zum Bearbeiten von Werkstücken, insbesondere von Blechen, mittels einer Werkzeugmaschine, die eine Stanzvorrichtung sowie eine Laserbearbeitungsvorrichtung aufweist, wobei für einen Stanzwerkzeugteil eines Stanzwerkzeugs der Stanzvorrichtung eine Position längs einer Arbeitshubachse der Stanzvorrichtung definiert und der Stanzwerkzeugteil mittels einer stanzseitigen Stellvorrichtung der Stanzvorrichtung längs der Arbeitshubachse der Stanzvorrichtung in die definierte Position zugestellt wird und wobei für eine Laser-Zusatzeinheit der außerdem eine Laserbearbeitungseinheit umfassenden Laserbearbeitungsvorrichtung eine Funktionsstellung definiert und die Laser-Zusatzeinheit mittels einer Zusatzeinheit-Stellvorrichtung mit einer Aktivierungsbewegung in die definierte Funktionsstellung zugestellt wird.

Eine Werkzeugmaschine und ein Bearbeitungsverfahren der vorstehenden Art sind in DE 20 2009 013 899 U1 offenbart.

Die als Stanz-Laser-Kombimaschine ausgeführte Maschine des Standes der Technik weist ein C-förmiges Maschinengestell mit einem oberen Gestellschenkel auf, an dessen freiem Ende eine Stanzvorrichtung und eine Laserbearbeitungsvorrichtung nebeneinander angeordnet sind. Die Stanzvorrichtung und die Laserbearbeitungsvorrichtung dienen zum Bearbeiten von Blechen, die zu diesem Zweck mittels einer Koordinatenführung über einen Werkstücktisch an einem unteren Gestellschenkel des C-förmigen Maschinengestells bewegt werden. Zur stanzenden Blechbearbeitung führt ein Stanzoberwerkzeug der Stanzvorrichtung Stanzhübe längs einer vertikalen Arbeitshubachse aus. Die Laserbearbeitungsvorrichtung umfasst als Bearbeitungseinheit einen Laserbearbeitungskopf und als Zusatzeinheit eine Abschirmungsvorrichtung. Der Laserbearbeitungskopf kann längs einer vertikalen Achse in eine werkstückferne Ruheposition angehoben und in eine werkstücknahe Arbeitsposition abgesenkt werden. Von dem in der Arbeitsposition befindlichen Laserbearbeitungskopf wird ein Laserbearbeitungsstrahl auf das zu bearbeitende Blech gerichtet. Auch die Abschirmungsvorrichtung der Laserbearbeitungsvorrichtung kann in vertikaler Richtung positioniert werden. In einer werkstücknahen Funktionsstellung dient die Abschirmungsvorrichtung dazu, die Bearbeitungsstelle des von dem in die Arbeitsposition abgesenkten Laserbearbeitungskopf auf das betreffende Blech gerichteten Laserbearbeitungsstrahls gegen die Umgebung abzuschirmen, um auf diese Art und Weise insbesondere zu verhindern, dass Laserstrahlung von der Bearbeitungsstelle des Laserbearbeitungsstrahls in die Umgebung austritt. Die Funktionsstellung der Abschirmungsvorrichtung ist derart definiert, dass zwischen der Unterseite der in der Funktionsstellung angeordneten Abschirmungsvorrichtung und der Oberseite des mittels des Laserbearbeitungsstrahls bearbeiteten Blechs ein Spalt mit einer Spaltweite von vorzugsweise etwa einem Millimeter verbleibt.

Eine Funktionalität der vorstehend beschriebenen Art an einer Werkzeugmaschine mit einer Stanzvorrichtung sowie mit einer eine Laserbearbeitungseinheit und eine Laser-Zusatzeinheit umfassenden Laserbearbeitungsvorrichtung mit möglichst einfachen Mitteln zu realisieren, ist Aufgabe der vorliegenden Erfindung.

Erfindungsgemäß gelöst wird diese Aufgabe durch die Werkzeugmaschine gemäß Patentanspruch 1 und das Bearbeitungsverfahren nach Patentanspruch 13.

Im Falle der Erfindung wird eine stanzseitige Stellvorrichtung, mittels derer ansonsten ein Stanzwerkzeugteil eines Stanzwerkzeugs längs einer Arbeitshubachse zugestellt wird und die folglich dazu geeignet ist, eine definierte Positionierung gegenüber einem Werkstück vorzunehmen, auch zur Definition der Funktionsstellung einer Laser-Zusatzeinheit einer Laserbearbeitungsvorrichtung genutzt. Mit der stanzseitigen Stellvorrichtung übernimmt ein und dieselbe Funktionseinheit eine Zustell- beziehungsweise Positionierungsfunktion sowohl an der Stanzseite als auch an der Laserbearbeitungsseite der erfindungsgemäßen Werkzeugmaschine. Nachdem die Zusatzeinheit-Stellvorrichtung der Laser-Zusatzeinheit dementsprechend die Funktionsstellung der Laser-Zusatzeinheit nicht definieren muss, kommt die erfindungsgemäße Werkzeugmaschine mit einer Zusatzeinheit-Stellvorrichtung einfacher Bauart aus. Ebenso wie die übrigen wesentlichen Funktionseinheiten der erfindungsgemäßen Werkzeugmaschine werden auch die stanzseitige Stellvorrichtung und die Zusatzeinheit-Stellvorrichtung mittels einer programmierbaren numerischen Steuerung der Werkzeugmaschine gesteuert. Dabei wird die Funktionsstellung der Laser-Zusatzeinheit auf einfache Art und Weise dadurch definiert, dass mittels der stanzseitigen Stellvorrichtung ein Anschlag für die Laser-Zusatzeinheit längs der Arbeitshubachse der Stanzvorrichtung in eine Anschlagposition zugestellt wird, die derart definiert ist, dass die an dem Anschlag in der Richtung der Aktivierungsbewegung abgestützte Laser-Zusatzeinheit die Funktionsstellung einnimmt. Für die Laser-Zusatzeinheit bedarf es dementsprechend lediglich einer Zusatzeinheit-Stellvorrichtung, die in der Lage ist, die Laser-Zusatzeinheit an dem mittels der stanzseitigen Stellvorrichtung positionierten Anschlag zur Anlage zu bringen.

Besondere Ausführungsarten der erfindungsgemäßen Werkzeugmaschine nach dem unabhängigen Patentanspruch 1 und des erfindungsgemäßen Bearbeitungsverfahrens gemäß dem unabhängigen Patentanspruch 13 ergeben sich aus den abhängigen Patentansprüchen 2 bis 12.

In bevorzugter Ausgestaltung der Erfindung ist vorgesehen, dass die stanzseitige Stellvorrichtung den Anschlag für die Laser-Zusatzeinheit und den Stanzwerkzeugteil des Stanzwerkzeugs gemeinschaftlich längs der Arbeitshubachse der Stanzvorrichtung zustellt. Eine gemeinschaftliche Zustellung des Anschlags für die Laser-Zusatzeinheit und des Stanzwerkzeugteils des Stanzwerkzeugs ist beispielsweise dann möglich, wenn der Anschlag für die Laser-Zusatzeinheit und der mittels der stanzseitigen Stellvorrichtung zu positionierende Stanzwerkzeugteil mechanisch miteinander verbunden sind.

Die Funktionsstellung der Laser-Zusatzeinheit kann insbesondere von der Art der Laser-Zusatzeinheit und/oder von deren konkreter Anwendung abhängig sein. Werden beispielsweise Werkstücke mit wechselnder Dicke mittels eines von einer Laser-Bearbeitungseinheit auf das Werkstück gerichteten Laserbearbeitungsstrahls bearbeitet und ist als Laser-Zusatzeinheit eine Abschirmungsvorrichtung vorgesehen, welche die werkstückseitige Bearbeitungsstelle des Laserbearbeitungsstrahls gegen die Umgebung abschirmen und unabhängig von der Dicke des bearbeiteten Werkstücks einen konstanten Abstand von der Werkstückoberfläche aufweisen soll, so ist die Funktionsstellung der Laser-Zusatzeinheit im Koordinatensystem der erfindungsgemäßen Werkzeugmaschine in Abhängigkeit von der Werkstückdicke und somit variabel zu definieren. Die Patentansprüche 3 und 4 betreffen Bauarten der erfindungsgemäßen Werkzeugmaschine, im Falle derer dies möglich ist.

Eine Feineinstellung der Funktionsstellung der Laser-Zusatzeinheit ist im Falle der erfindungsgemäßen Werkzeugmaschine nach Patentanspruch 5 dadurch möglich, dass die Laser-Zusatzeinheit einen in der Richtung ihrer Aktivierungsbewegung justierbaren Gegenanschlag aufweist, über welchen sich die Laser-Zusatzeinheit an dem mittels der stanzseitigen Stellvorrichtung längs der Arbeitshubachse der Stanzvorrichtung zugestellten Anschlag in der Richtung der Aktivierungsbewegung abstützt.

Ausweislich Patentanspruch 6 ist als Justiervorrichtung zur Feineinstellung der Funktionsstellung der Laser-Zusatzeinheit der Einfachheit halber eine Stellschraube vorgesehen.

Gemäß Patentanspruch 7 weist die erfindungsgemäße Werkzeugmaschine in weiterer bevorzugter Ausgestaltung eine Laser-Bewegungseinheit auf, an welcher die Laserbearbeitungseinheit, die Laser-Zusatzeinheit sowie die Zusatzeinheit-Stellvorrichtung der Laserbearbeitungsvorrichtung vorgesehen sind. Mittels einer Bearbeitungseinheit-Stellvorrichtung ist die Laser-Bewegungseinheit in Positionen zustellbar, welche einer werkstückfernen Ruheposition oder einer werkstücknahen Arbeitsposition der Laserbearbeitungseinheit zugeordnet sind. Die an der Laser-Bewegungseinheit vorgesehene Zusatzeinheit-Stellvorrichtung dient dazu, die Laser-Zusatzeinheit relativ zu der Laser-Bewegungseinheit mit der Aktivierungsbewegung in die definierte Funktionsstellung zuzustellen. Aufgrund der Verwendung einer Bearbeitungseinheit-Stellvorrichtung und einer davon getrennten Zusatzeinheit-Stellvorrichtung sind die Laserbearbeitungseinheit und die Laser-Zusatzeinheit der Laserbearbeitungsvorrichtung voneinander entkoppelt zustellbar. Dieser Umstand ist beispielsweise vor dem Hintergrund von Belang, dass bei der Laserbearbeitung von Werkstücken die Notwendigkeit bestehen kann, dass die Laserbearbeitungseinheit zur Gewährleistung einer konstanten Fokuslage des Laserbearbeitungsstrahls an dem bearbeiteten Werkstück Ausgleichsbewegungen gegenüber dem Werkstück ausführen muss, während für eine als Laser-Zusatzeinheit vorgesehene Abschirmungsvorrichtung für die werkstückseitige Bearbeitungsstelle des Laserbearbeitungsstrahls derartige Ausgleichsbewegungen nicht gewünscht sind. Darüber hinaus kann im Falle der Werkzeugmaschine gemäß Patentanspruch 7 eine mittels der Bearbeitungseinheit-Stellvorrichtung erzeugte Zustellbewegung der mit der Laser-Zusatzeinheit versehenen Laser-Bewegungseinheit dazu genutzt werden, die Laser-Zusatzeinheit in eine der Funktionsstellung der Laser-Zusatzeinheit angenäherte Position zu überführen. Ausgehend von dieser Voreinstellung der Laser-Zusatzeinheit bedarf es dann lediglich noch einer Aktivierungsbewegung mit einem verhältnismäßig kleinen Betrag, um die Laser-Zusatzeinheit in die Funktionsstellung zu überführen. Die Aktivierungsbewegung der Laser-Zusatzeinheit in die Funktionsstellung kann folglich mit einer klein bauenden und/oder mit einer technisch einfach ausgeführten Zusatzeinheit-Stellvorrichtung erzeugt werden.

Im Falle der Erfindung kann es sich bei dem Stanzwerkzeugteil, dessen stanzseitige Stellvorrichtung zur Definition der Funktionsstellung der Laser-Zusatzeinheit genutzt wird, grundsätzlich um einen Stanzwerkzeugteil handeln, welcher ein Werkstück schneidend bearbeitet. Als stanzseitige Stellvorrichtung im Sinne der Erfindung kommt dementsprechend auch ein Stanzantrieb der Stanzvorrichtung der erfindungsgemäßen Werkzeugmaschine in Frage.

Ausweislich Patentanspruch 8 bevorzugt wird im Falle der Erfindung eine stanzseitige Stellvorrichtung, die zusätzlich zu einem Stanzantrieb vorgesehen ist, wobei mittels des Stanzantriebs eine Stanzbearbeitungseinheit und mittels der stanzseitigen Stellvorrichtung ein von der Stanzbearbeitungseinheit verschiedener Stanzwerkzeugteil eines Stanzwerkzeugs längs der Arbeitshubachse der Stanzvorrichtung bewegt wird. Die Stanzbearbeitungseinheit wird durch den Stanzantrieb längs der Arbeitshubachse mit einem zu einem Werkstück hin gerichteten Arbeitshub und mit einem dem Arbeitshub entgegengerichteten Rückhub bewegt. Der mittels des Stanzantriebs erzeugte Rückhub der Stanzbearbeitungseinheit wird genutzt, um die mittels der Zusatzeinheit-Stellvorrichtung in die Funktionsstellung zugestellte Laser-Zusatzeinheit der Laserbearbeitungsvorrichtung aus der Funktionsstellung in eine Außerfunktionsstellung zuzustellen.

Im Falle der Erfindungsbauart gemäß Patentanspruch 9 ist zur Überführung der Laser-Zusatzeinheit in die Außerfunktionsstellung an einem Stößel des Stanzantriebs ein Mitnehmer vorgesehen. Wird die Funktionsstellung der Laser-Zusatzeinheit mittels eines durch die stanzseitige Stellvorrichtung zustellbaren Anschlags definiert, so kann der an dem Stößel des Stanzantriebs vorgesehene Mitnehmer bei einer mit einem Rückhub des Stanzantriebs verbunden Rückzugsbewegung des Stößels den Anschlag mitnehmen und über diesen die an dem Anschlag in der Richtung der Aktivierungsbewegung abgestützte Laser-Zusatzeinheit aus der Funktionsstellung in die Außerfunktionsstellung bewegen.

Als stanzseitige Stellvorrichtung zur Definition der Funktionsstellung der Laser-Zusatzeinheit ist in bevorzugter Ausgestaltung der Erfindung eine Zustellvorrichtung vorgesehen, die ansonsten dazu dient, einen Stanzwerkzeugteil in Form eines Abstreifers des Stanzwerkzeugs längs der Arbeitshubachse der Stanzvorrichtung zu positionieren (Patentanspruch 10).

Mit einer Kolben-Zylinder-Einheit weist die erfindungsgemäße Werkzeugmaschine gemäß Patentanspruch 11 vorteilhafterweise eine konstruktiv einfache aber gleichwohl funktionssichere Stellvorrichtung als Zusatzeinheit-Stellvorrichtung und/oder als stanzseitige Stellvorrichtung und/oder als Bearbeitungseinheit-Stellvorrichtung auf.

Besonders praxisrelevante Bauarten der Laser-Zusatzeinheit sind an erfindungsgemäßen Werkzeugmaschinen gemäß Patentanspruch 12 vorgesehen. Bevorzugt wird eine Laser-Zusatzeinheit, die sowohl als Abschirmungsvorrichtung als auch als Werkstück-Niederhalter dienen kann.

Nachfolgend wird die Erfindung anhand einer beispielhaften schematischen Darstellung einer erfindungsgemäßen Werkzeugmaschine näher erläutert.

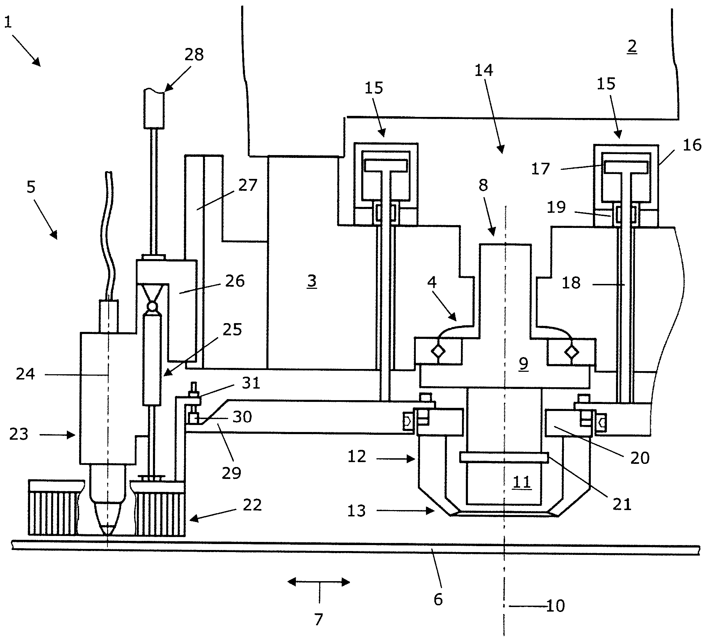

Die Zeichnung zeigt einen Teil einer als Stanz-Laser-Kombimaschine ausgeführten Werkzeugmaschine 1. Die Werkzeugmaschine 1 weist ein Maschinengestell 2 auf, an dem eine Tragstruktur 3 senkrecht zu der Zeichenebene beweglich geführt ist. Die Tragstruktur 3 lagert eine Stanzvorrichtung 4 sowie eine Laserbearbeitungsvorrichtung 5. Sowohl die Stanzvorrichtung 4 als auch die Laserbearbeitungsvorrichtung 5 dienen zum Bearbeiten eines Blechs 6, das während der Bearbeitung auf einem der Einfachheit halber nicht dargestellten Werkstücktisch herkömmlicher Bauart gelagert ist. Das Blech 6 ist zu Bearbeitungszwecken mittels einer herkömmlichen Koordinatenführung in Richtung eines Doppelpfeils 7 über den Werkstücktisch bewegbar.

Aufgrund der Beweglichkeit der Tragstruktur 3 senkrecht zu der Zeichenebene und der gleichzeitig bestehenden Beweglichkeit des Blechs 6 in Richtung des Doppelpfeils 7 können die Stanzvorrichtung 4 und die Laserbearbeitungsvorrichtung 5 an jeder beliebigen Stelle des Blechs 6 positioniert werden.

Die Stanzvorrichtung 4 umfasst einen Stanzantrieb 8 mit einem nicht dargestellten hydraulischen oder elektrischen Antriebsaggregat herkömmlicher Bauart sowie mit einem Stößel 9, der mittels des Antriebsaggregats längs einer Arbeitshubachse 10 der Stanzvorrichtung 4 angehoben und abgesenkt werden kann. Zur stanzenden Bearbeitung des Blechs 6 wird in eine Werkzeugaufnahme 11 an dem unteren Ende des Stößels 9 auf bekannte Art und Weise ein als Stanzbearbeitungseinheit dienender Stanzstempel üblicher Bauart eingewechselt. In der Zeichnung ist der Stanzstempel ebenso wenig gezeigt wie eine herkömmliche Stanzmatrize, die zur stanzenden Bearbeitung des Blechs 6 mit dem Stanzstempel zusammenwirkt und die unterhalb des Blechs 6 dem Stanzstempel gegenüberliegt. Der Stanzstempel und die Stanzmatrize bilden gemeinsam mit einem als weiterer Stanzwerkzeugteil vorgesehenen Abstreifer 12 ein Stanzwerkzeug 13 der Stanzvorrichtung 4.

Während der Stößel 9 mittels des Antriebsaggregats des Stanzantriebs 8 längs der Arbeitshubachse 10 angehoben und abgesenkt werden kann, ist der Abstreifer 12 des Stanzwerkzeugs 13 mittels einer stanzseitigen Stellvorrichtung 14 längs der Arbeitshubachse 10 der Stanzvorrichtung 4 in definierte Positionen zustellbar. Der Stanzantrieb 8 und die stanzseitige Stellvorrichtung 14 werden ebenso wie die übrigen Funktionseinheiten der Werkzeugmaschine 1 mittels einer programmierbaren numerischen Steuerung gesteuert.

Die stanzseitige Stellvorrichtung 14 umfasst zwei baugleiche Kolben-Zylinder-Einheiten 15, von denen jede einen mit der Tragstruktur 3 der Werkzeugmaschine 1 verbundenen Zylinder 16 sowie einen in dem Innern des Zylinders 16 längs der Arbeitshubachse 10 beweglichen Kolben 17 aufweist. An jedem der Kolben 17 ist eine Kolbenstange 18 angebracht, die nach unten aus dem betreffenden Zylinder 16 austritt und die sich ausgehend von dem Kolben 17 längs der Arbeitshubachse 10 erstreckt. Mit ihrem von dem Kolben 17 abliegenden Ende ist die Kolbenstange 18 jeder Kolben-Zylinder-Einheit 15 an den Abstreifer 12 angebunden. Nahe dem Austritt der Kolbenstange 18 an dem jeweiligen Zylinder 16 ist an jeder Kolben-Zylinder-Einheit 15 eine hydraulisch betätigbare Klemmvorrichtung 19 mit zwei einander gegenüberliegenden Klemmbacken vorgesehen.

Aufgrund der gewählten Antriebskonfiguration sind der Abstreifer 12 des Stanzwerkzeugs 13 und der mit dem nicht gezeigten Stanzstempel des Stanzwerkzeugs 13 versehene Stößel 9 des Stanzantriebs 8 voneinander entkoppelt längs der Arbeitshubachse 10 der Stanzvorrichtung 4 beweglich.

Die stanzseitige Stellvorrichtung 14 kann bei der stanzenden Bearbeitung des Blechs 6 in zwei unterschiedlichen Betriebsmodi betrieben werden, nämlich in dem Betriebsmodus "aktiver Abstreifer" oder in dem Betriebsmodus "passiver Abstreifer".

Zu Beginn eines Stanzvorgangs befindet sich der Stößel 9 des Stanzantriebs 8 in seinem oberen Totpunkt. Der Abstreifer 12 ist mittels der stanzseitigen Stellvorrichtung 14 in seine obere Endposition bewegt und folglich von dem Blech 6 maximal beabstandet. Ein Innenbund 20 des Abstreifers 12 ist in vertikaler Richtung oberhalb eines Außenbundes 21 des Stößels 9 angeordnet.

In dem Betriebsmodus "aktiver Abstreifer" der stanzseitigen Stellvorrichtung 14 sind die Klemmvorrichtungen 19 an den Kolben-Zylinder-Einheiten 15 fortwährend deaktiviert. Aufgrund eines in den Zylindern 16 der Kolben-Zylinder-Einheiten 15 oberhalb der Kolben 17 aufgebauten Drucks wird der Abstreifer 12 folglich über die Kolben 17 und die Kolbenstangen 18 längs der Arbeitshubachse 10 der Stanzvorrichtung 4 mit dem Innenbund 20 von oben auf den Außenbund 21 des Stößels 9 gepresst. Das untere Ende des Abstreifers 12 steht dabei gegenüber dem an dem Stößel 9 angebrachten Stanzstempel zu dem Blech 6 hin vor.

Wird ausgehend von diesen Verhältnissen der Stanzantrieb 8 betätigt und der Stanzstempel folglich mit einem zu dem Blech 6 hin gerichteten Arbeitshub bewegt und sind die Kolben 17 im Innern der Zylinder 16 der Kolben-Zylinder-Einheiten 15 der stanzseitigen Stellvorrichtung 14 weiterhin an ihrer Oberseite druckbeaufschlagt, so senkt sich der Stößel 9 gemeinsam mit dem auf dem Außenbund 21 des Stößels 9 aufsitzenden Abstreifer 12 längs der Arbeitshubachse 10 der Stanzvorrichtung 4 in Richtung auf das Blech 6 ab. Während der gemeinsamen Abwärtsbewegung längs der Arbeitshubachse 10 läuft der zunächst gegenüber dem Stanzstempel in der Richtung des Arbeitshubs des Stanzstempels voreilende Abstreifer 12 auf die Oberseite des Blechs 6 auf, während der Stößel 9 und der daran angebrachte Stanzstempel dessen ungeachtet ihre Abwärtsbewegung fortsetzen. Im Laufe der von dem Stößel 9 und dem Stanzstempel nun relativ zu dem Abstreifer 12 ausgeführten Absenkbewegung erstellt der an dem Stößel 9 vorgesehene Stanzstempel im Zusammenwirken mit der an der gegenüberliegenden Seite des Blechs 6 angeordneten Stanzmatrize an dem Blech 6 eine Ausstanzung.

Mit Beendigung des Arbeitshubes des Stanzstempels und bei in seinem unteren Totpunkt angeordnetem Stößel 9 werden die im Innern der Zylinder 16 der Kolben-Zylinder-Einheiten 15 oberhalb der Kolben 17 ausgebildeten Zylinderräume drucklos geschaltet. Führt nun der Stanzstempel einen dem vorausgegangenen Arbeitshub entgegen gerichteten Rückhub aus und bewegt sich folglich der Stößel 9 längs der Arbeitshubachse 10 mit einer Rückzugsbewegung nach oben, so läuft der Außenbund 21 des Stößels 9 auf die Unterseite des Innenbundes 20 des zunächst noch auf dem Blech 6 aufsitzenden Abstreifers 12 auf. Bei fortgesetzter Rückzugsbewegung des Stößels 9 längs der Arbeitshubachse 10 nimmt der Stößel 9 den Abstreifer 12 mit in dessen obere Endposition, in welcher das untere Ende des Abstreifers 12 wieder maximal von dem Blech 6 beabstandet ist.

Es kann sich dann eine weitere stanzende Bearbeitung des Blechs 6 anschließen, die gegebenenfalls in der vorstehend beschriebenen Art und Weise abläuft. Im Betriebsmodus "aktiver Abstreifer" der stanzseitigen Stellvorrichtung 14 wird der Abstreifer 12 dementsprechend bei fortwährend deaktivierten Klemmvorrichtungen 19 der stanzseitigen Stellvorrichtung 14 mit jedem Arbeitshub des Stanzstempels aus der oberen Endposition abgesenkt, bis er auf dem zu bearbeitenden Blech 6 aufsetzt.

Anders stellen sich die Verhältnisse im Betriebsmodus "passiver Abstreifer" der stanzseitigen Stellvorrichtung 14 dar.

Auch in diesem Betriebsmodus der stanzseitigen Stellvorrichtung 14 wird zunächst der Innenbund 20 des in der oberen Endposition befindlichen Abstreifers 12 durch Betätigen der Kolben-Zylinder-Einheiten 15 der stanzseitigen Stellvorrichtung und bei deaktivierten Klemmvorrichtungen der stanzseitigen Stellvorrichtung 14 längs der Arbeitshubachse 10 von oben auf den Außenbund 21 des in seinem oberen Totpunkt angeordneten Stößels 9 gepresst. Und auch im Betriebsmodus "passiver Abstreifer" der stanzseitigen Stellvorrichtung 14 bewirkt eine bei diesen Verhältnissen vorgenommene Aktivierung des Stanzantriebs 8, dass der Stößel 9 und der Abstreifer 12 zunächst eine gemeinsame Absenkbewegung längs der Arbeitshubachse 10 ausführen.

Im Betriebsmodus "passiver Abstreifer" der stanzseitigen Stellvorrichtung 14 endet die gemeinsame Absenkbewegung des Stößels 9 und des Abstreifers 12 aber noch bevor der Abstreifer 12 auf dem Blech 6 aufsetzt. Stattdessen werden zu einem Zeitpunkt, zu welchem die Unterseite des Abstreifers 12 noch etwa ein Millimeter von dem Blech 6 entfernt ist, die Klemmvorrichtungen 19 an den Kolben-Zylinder-Einheiten 15 der stanzseitigen Stellvorrichtung 14 betätigt. Dadurch wird der Abstreifer 12 an einer fortgesetzten Absenkbewegung längs der Arbeitshubachse 10 gehindert. In Folge der Klemmung der Kolbenstangen 18 der Kolben-Zylinder-Einheiten 15 vollzieht der Abstreifer 12 die weitere Absenkbewegung des Stößels 9 nicht mit. Während sich der Stößel 9 weiter absenkt und während der an dem Stößel 9 angebrachte Stanzstempel seinen Arbeitshub längs der Arbeitshubachse 10 der Stanzvorrichtung 4 fortsetzt und schließlich das Blech 6 stanzend bearbeitet, verbleibt der Abstreifer 12 längs der Arbeitshubachse 10 in der Position, in welcher er von dem Blech 6 einen definierten Abstand aufweist. Bei der sich an den Arbeitshub des Stanzstempels anschließenden Rückzugsbewegung des Stößels 9 läuft der Außenbund 21 des Stößels 9 auf den Innenbund 20 des mittels der Klemmvorrichtungen 19 lagefixierten Abstreifers 12 auf. Werden nun die Kolben-Zylinder-Einheiten 15 der stanzseitigen Stellvorrichtung 14 drucklos geschaltet und die Klemmvorrichtungen 19 gelöst, so kann der Stößel 9 bei fortgesetzter Rückzugsbewegung den Abstreifer 12 in dessen obere Endposition mitnehmen.

In dem Betriebsmodus "passiver Abstreifer" wird bei Laserbetrieb der Werkzeugmaschine 1 die stanzseitige Stellvorrichtung 14 der Werkzeugmaschine 1 auf die in der Zeichnung veranschaulichte Art und Weise dazu genutzt, eine Funktionsstellung einer als Laser-Zusatzeinheit vorgesehenen Abschirmungsvorrichtung 22 der Laserbearbeitungsvorrichtung 5 zu definieren.

Die Abschirmungsvorrichtung 22 ist zusätzlich zu einem als Laserbearbeitungseinheit der Laserbearbeitungsvorrichtung 5 dienenden Laserschneidkopf 23 vorgesehen. Die Aufgabe der Abschirmungsvorrichtung 22 besteht hauptsächlich darin, bei der Bearbeitung des Blechs mittels eines von dem Laserschneidkopf 23 auf das Blech 6 gerichteten Laserbearbeitungsstrahls die Bearbeitungsstelle des Laserbearbeitungsstahls an dem Blech 6 gegen die Umgebung abzuschirmen. Die Verhältnisse bei der Bearbeitung des Blechs 6 mittels des durch eine Strahlachse 24 angedeuteten Laserbearbeitungsstrahls sind in der Zeichnung dargestellt. Zusätzlich kann die Abschirmungsvorrichtung 22 auch als Werkstück-Niederhalter genutzt werden und als solcher ein Flattern des Blechs 6 bei in Richtung des Doppelpfeils 7 ausgeführten Blechbewegungen verhindern.

Die Abschirmungsvorrichtung 22, der Laserschneidkopf 23 und eine Zusatzeinheit-Stellvorrichtung in Form einer Kolben-Zylinder-Einheit 25 sind an einem Schlitten 26 vorgesehen, der an einer Linearführung 27 der Tragstruktur 3 der Werkzeugmaschine 1 längs der Arbeitshubachse 10 der Stanzvorrichtung 4 beweglich geführt ist. Zur Bewegung des Schlittens 26 entlang der Linearführung 27 dient eine als Kolben-Zylinder-Einheit 28 ausgeführte Bearbeitungseinheit-Stellvorrichtung, deren Zylinder in der Zeichnung abgebrochen dargestellt und an dem in der Zeichnung nicht sichtbaren Ende an die Tragstruktur 3 der Werkzeugmaschine 1 angebunden ist.

Während der stanzenden Bearbeitung des Blechs 6 ist die Laserbearbeitungsvorrichtung 5 außer Betrieb. Mittels der Kolben-Zylinder-Einheit 28 ist der Schlitten 26 längs der Linearführung 27 der Tragstruktur 3 in eine obere Endstellung und dadurch der an dem Schlitten 26 angebrachte Laserschneidkopf 23 in eine werkstückferne Ruheposition bewegt, bei welcher eine an dem werkstückseitigen Ende des Laserschneidkopfs 23 in üblicher Weise vorgesehene Laserdüse einen verhältnismäßig großen Abstand von dem zu bearbeitenden Blech 6 aufweist. Die mit der Abschirmungsvorrichtung 22 verbundene Kolbenstange der Kolben-Zylinder-Einheit 25 ist in das Innere des zugehörigen Zylinders eingefahren. Infolgedessen nimmt die Abschirmungsvorrichtung 22 längs der Arbeitshubachse 10 der Stanzvorrichtung 4 gegenüber dem in der werkstückfernen Ruheposition angeordneten Laserschneidkopf 23 eine Position ein, bei welcher die Laserdüse an dem unteren Ende des Laserschneidkopfs 23 gegenüber der Unterseite der Abschirmungsvorrichtung 22 deutlich zu dem Blech 6 hin vorsteht.

Ist ein Stanzvorgang an dem Blech 6 beendet und sind dementsprechend der mit dem Stanzstempel versehene Stößel 9 in seinen oberen Totpunkt und der Abstreifer 12 des Stanzwerkzeug 13 in seine obere Endposition angehoben, so wird die Laserbearbeitung des Blechs 6 mit Hilfe der stanzseitigen Stellvorrichtung 14 vorbereitet.

Im Betriebsmodus "passiver Abstreifer" der stanzseitigen Stellvorrichtung 14 werden zu diesem Zweck zunächst bei deaktivierten Klemmvorrichtungen 19 der stanzseitigen Stellvorrichtung 14 der Stößel 9 und der mit dem Innenbund 20 auf dem Außenbund 21 des Stößels 9 aufsitzende Abstreifer 12 gemeinschaftlich längs der Arbeitshubachse 10 der Stanzvorrichtung 4 abgesenkt. Die Klemmvorrichtungen 19 werden betätigt und die Absenkbewegung des Abstreifers 12 wird infolgedessen beendet, sobald ein an dem Abstreifer 12 vorgesehener Anschlag 29 für die Abschirmungsvorrichtung 22 längs der Arbeitshubachse 10 in eine definierte und in der numerischen Steuerung der Werkzeugmaschine 1 hinterlegte Anschlagposition zugestellt ist. Der Stößel 9 setzt seine Absenkbewegung danach zwar noch fort, wird durch Stillsetzen des Stanzantriebs 8 dann aber bereits zu einem Zeitpunkt angehalten, zu welchem der Stanzstempel an dem Stößel 9 von dem Blech 6 noch deutlich beabstandet ist. Der Abstand zwischen dem stillgesetzten Stanzstempel und dem Blech 6 kann beispielsweise derart bemessen sein, dass das Blech 6 bei im Rahmen der anschließenden Laserbearbeitung in Richtung des Doppelpfeils 7 ausgeführten Blechbewegungen den Stanzstempel auch dann passieren kann, wenn an dem Blech 6 Umformungen nach oben hin vorragen.

Ist der mit dem Abstreifer 12 verbundene Anschlag 29 mittels der stanzseitigen Stellvorrichtung 14 in die definierte Anschlagposition zugestellt, wird die als Bearbeitungseinheit-Stellvorrichtung vorgesehene Kolben-Zylinder-Einheit 28 betätigt und der Laserschneidkopf 23 wird aus seiner werkstückfernen Ruheposition in Richtung auf das zu bearbeitende Blech 6 in eine werkstücknahe Arbeitsposition bewegt, in welcher der Laserbearbeitungskopf 23 das Blech 6 mittels eines Laserbearbeitungsstrahls bearbeiten kann. Da die Kolben-Zylinder-Einheit 28 an dem Schlitten 26 angreift und dieser außerdem auch die als Zusatzeinheit-Stellvorrichtung dienende Kolben-Zylinder-Einheit 25 sowie die Abschirmungsvorrichtung 22 lagert, vollziehen die Kolben-Zylinder-Einheit 25 und die Abschirmungsvorrichtung 22 die mittels der Kolben-Zylinder-Einheit 28 erzeugte Absenkbewegung des Laserschneidkopfs 23 mit.

Ist der Laserschneidkopf 23 in die werkstücknahe Arbeitsposition zugestellt, so ist die Abschirmungsvorrichtung 22 zunächst noch gegenüber dem Laserschneidkopf 23 derart angeordnet, dass die Unterseite der Abschirmungsvorrichtung 22 in vertikaler Richtung einen wesentlich größeren Abstand von dem Blech 6 aufweist als die Laserdüse an dem unteren Ende des Laserschneidkopfs 23. Die Abschirmungsvorrichtung 22 ist folglich noch nicht in der Lage, die ihr zugedachte Abschirmungsfunktion zu übernehmen.

Um insoweit Abhilfe zu schaffen, wird die Kolben-Zylinder-Einheit 25 betätigt. Infolgedessen fährt die Kolbenstange der Kolben-Zylinder-Einheit 25 nach unten aus dem zugehörigen Zylinder aus und die Abschirmungsvorrichtung 22 führt relativ zu dem Laserschneidkopf 23 eine zu dem Blech 6 hin gerichtete Aktivierungsbewegung aus. Die Aktivierungsbewegung der Abschirmungsvorrichtung 22 endet, sobald ein an der Abschirmungsvorrichtung 22 vorgesehener Gegenanschlag 30 auf den mittels der Kolben-Zylinder-Einheiten 15 der stanzseitigen Stellvorrichtung 14 in die definierte Anschlagposition zugestellten Anschlag 29 aufläuft. Die Anschlagposition des Anschlags 29 ist derart definiert, dass bei an dem Anschlag 29 in Richtung der Aktivierungsbewegung abgestützter Abschirmungsvorrichtung 22 die Unterseite der Abschirmungsvorrichtung 22 einen Abstand von etwa einem Millimeter von dem zu bearbeitenden Blech 6 aufweist und die Abschirmungsvorrichtung 22 folglich ihre Funktionsstellung einnimmt, in welcher die Abschirmungsvorrichtung 22 in der Lage ist, die Bearbeitungsstelle des von dem Laserschneidkopf 23 auf das Blech 6 gerichteten Laserbearbeitungsstrahls gegen die Umgebung abzuschirmen. Über die Anschlagposition des mittels der stanzseitigen Zustellvorrichtung 14 gemeinsam mit dem Abstreifer 12 längs der Arbeitshubachse 10 der Stanzvorrichtung 4 zugestellten Anschlags 29 wird folglich die die Funktionsstellung der Abschirmungsvorrichtung 22 definiert.

Eine zwischen dem Gegenanschlag 30 an der Abschirmungsvorrichtung 22 und dem Anschlag 29 an dem Abstreifer 12 vorgesehenen Justiervorrichtung 31, die in dem dargestellten Beispielsfall als Stellschraube ausgeführt ist, ermöglicht eine Feineinstellung der Funktionsstellung der Abschirmungsvorrichtung 22.

Soll anstelle des in der Zeichnung dargestellten Blechs 6 ein Blech größerer Dicke bearbeitet werden, so wird der Anschlag 29 für die Abschirmungsvorrichtung 22 durch entsprechende Steuerung der stanzseitigen Stellvorrichtung 14, im Einzelnen der Klemmvorrichtungen 19 der stanzseitigen Stellvorrichtung 14, in eine Anschlagposition zugestellt, die um die Blechdickendifferenz höher liegt als die in der Zeichnung dargestellte Anschlagposition. In eine um die Blechdickendifferenz niedrigere Anschlagposition wird der Anschlag 29 mittels der stanzseitigen Stellvorrichtung 14 zugestellt, wenn ein Blech zu bearbeiten ist, das eine geringere Dicke als das Blech 6 aufweist.

## Patentansprüche

1. Werkzeugmaschine zum Bearbeiten von Werkstücken, insbesondere von Blechen (6), mit einer Stanzvorrichtung (4) sowie mit einer Laserbearbeitungsvorrichtung (5),
• wobei die Stanzvorrichtung (4) eine stanzseitige Stellvorrichtung (14) umfasst, welche einen Stanzwerkzeugteil (12) eines Stanzwerkzeugs (13) längs einer Arbeitshubachse (10) der Stanzvorrichtung (4) in eine definierte Position zustellt,
• wobei die Laserbearbeitungsvorrichtung (5) eine Laserbearbeitungseinheit (23) sowie eine Laser-Zusatzeinheit (22) aufweist und
• wobei eine Zusatzeinheit-Stellvorrichtung (25) die Laser-Zusatzeinheit (22) mit einer Aktivierungsbewegung in eine definierte Funktionsstellung zustellt,
**dadurch gekennzeichnet, dass**
die stanzseitige Stellvorrichtung (14) die Funktionsstellung der Laser-Zusatzeinheit (22) definiert, indem die stanzseitige Stellvorrichtung (14) einen in der Richtung der Aktivierungsbewegung der Laser-Zusatzeinheit (22) wirksamen Anschlag (29) für die Laser-Zusatzeinheit (22) längs der Arbeitshubachse (10) der Stanzvorrichtung (4) in eine Anschlagposition zustellt, welche derart definiert ist, dass die an dem Anschlag (29) in der Richtung der Aktivierungsbewegung abgestützte Laser-Zusatzeinheit (22) die Funktionsstellung einnimmt.

2. Werkzeugmaschine nach Anspruch 1, **dadurch gekennzeichnet, dass** die stanzseitige Stellvorrichtung (14) den Anschlag (29) für die Laser-Zusatzeinheit (22) und den Stanzwerkzeugteil (12) des Stanzwerkzeugs (13) gemeinschaftlich längs der Arbeitshubachse (10) der Stanzvorrichtung (4) zustellt.

3. Werkzeugmaschine nach einem der vorhergehenden Ansprüche, **dadurch gekennzeichnet, dass** die stanzseitige Stellvorrichtung (14) die Funktionsstellung der Laser-Zusatzeinheit (22) variabel definiert.

4. Werkzeugmaschine nach Anspruch 3, **dadurch gekennzeichnet, dass** die stanzseitige Stellvorrichtung (14) die Funktionsstellung der Laser-Zusatzeinheit (22) variabel definiert, indem die stanzseitige Stellvorrichtung (14) die Anschlagposition des Anschlags (29) für die Laser-Zusatzeinheit (22) variabel definiert.

5. Werkzeugmaschine nach einem der vorhergehenden Ansprüche, **dadurch gekennzeichnet, dass** die Laser-Zusatzeinheit (22) einen Gegenanschlag (30) aufweist und in der Funktionsstellung über den Gegenanschlag (30) an dem mittels der stanzseitigen Stellvorrichtung (14) längs der Arbeitshubachse (10) der Stanzvorrichtung (4) zugestellten Anschlag (29) in der Richtung der Aktivierungsbewegung abgestützt ist und dass eine Justiervorrichtung (31) vorgesehen ist, welche den Gegenanschlag (30) und die Laser-Zusatzeinheit (22) in der Richtung der Aktivierungsbewegung relativ zueinander justiert.

6. Werkzeugmaschine nach Anspruch 5, **dadurch gekennzeichnet, dass** als Justiervorrichtung (31) eine Stellschraube vorgesehen ist.

7. Werkzeugmaschine nach einem der vorhergehenden Ansprüche, **dadurch gekennzeichnet,**
• **dass** eine Laser-Bewegungseinheit (26) vorgesehen ist, an welcher die Laserbearbeitungseinheit (23), die Laser-Zusatzeinheit (22) sowie die Zusatzeinheit-Stellvorrichtung (25) gelagert sind und
• **dass** eine Bearbeitungseinheit-Stellvorrichtung (28) vorgesehen ist, welche die Laserbearbeitungseinheit (23) in eine werkstückferne Ruheposition und in eine werkstücknahe Arbeitsposition zustellt, indem die Bearbeitungseinheit-Stellvorrichtung (28) die Laser-Bewegungseinheit (26) in eine der werkstückfernen Ruheposition der Laserbearbeitungseinheit (23) zugeordnete Position und in eine der werkstücknahen Arbeitsposition der Laserbearbeitungseinheit (23) zugeordnete Position zustellt und
• **dass** die Zusatzeinheit-Stellvorrichtung (25) die Laser-Zusatzeinheit (22) relativ zu der Laser-Bewegungseinheit (26) mit der Aktivierungsbewegung in die definierte Funktionsstellung zustellt.

8. Werkzeugmaschine nach einem der vorhergehenden Ansprüche, **dadurch gekennzeichnet, dass** zusätzlich zu der stanzseitigen Stellvorrichtung (14) ein Stanzantrieb (8) und zusätzlich zu dem mittels der stanzseitigen Stellvorrichtung (14) zustellbaren Stanzwerkzeugteil (12) eine Stanzbearbeitungseinheit des Stanzwerkzeugs (13) vorgesehen sind, wobei der Stanzantrieb (8) die Stanzbearbeitungseinheit längs der Arbeitshubachse (10) mit einem zu einem Werkstück hin gerichteten Arbeitshub und mit einem dem Arbeitshub entgegengerichteten Rückhub bewegt und dass der die Stanzbearbeitungseinheit (23) mit einem Rückhub bewegende Stanzantrieb (8) die mittels der Zusatzeinheit-Stellvorrichtung (25) in die Funktionsstellung zugestellte Laser-Zusatzeinheit (22) aus der Funktionsstellung mit einer der Aktivierungsbewegung entgegengerichteten Deaktivierungsbewegung in eine Außerfunktionsstellung zustellt.

9. Werkzeugmaschine nach Anspruch 8, **dadurch gekennzeichnet dass** der Stanzantrieb (8) einen Stößel (9) aufweist und die Stanzbearbeitungseinheit an dem Stößel (9) des Stanzantriebs (8) vorgesehen und durch eine Rückzugsbewegung des Stößels (9) mit dem Rückhub bewegbar ist und dass der Stößel (9) des Stanzantriebs (8) einen Mitnehmer (21) aufweist, mittels dessen der mit der Rückzugsbewegung bewegte Stößel (9) den mittels der stanzseitigen Stellvorrichtung (14) in die Anschlagposition zugestellten Anschlag (29) mitnimmt und dadurch die an dem Anschlag (29) in der Richtung der Aktivierungsbewegung abgestützte Laser-Zusatzeinheit (22) aus der Funktionsstellung mit der Deaktivierungsbewegung in die Außerfunktionsstellung zustellt.

10. Werkzeugmaschine nach einem der vorhergehenden Ansprüche, **dadurch gekennzeichnet, dass** die stanzseitige Stellvorrichtung (14) als Stanzwerkzeugteil (12) einen Abstreifer des Stanzwerkzeugs (13) längs der Arbeitshubachse (10) zustellt.

11. Werkzeugmaschine nach einem der vorhergehenden Ansprüche, **dadurch gekennzeichnet, dass** als Zusatzeinheit-Stellvorrichtung (25) und/oder als stanzseitige Stellvorrichtung (14) und/oder als Bearbeitungseinheit-Stellvorrichtung (28) eine Kolben-Zylinder-Einheit vorgesehen ist.

12. Werkzeugmaschine nach einem der vorhergehenden Ansprüche, **dadurch gekennzeichnet, dass** als Laser-Zusatzeinheit (22) eine Vorrichtung zur Abschirmung eines von der Laserbearbeitungseinheit (23) auf ein zu bearbeitendes Werkstück gerichteten Laserstrahls und/oder ein Werkstück-Niederhalter vorgesehen ist.

13. Verfahren zum Bearbeiten von Werkstücken, insbesondere von Blechen (6), mittels einer Werkzeugmaschine (1), die eine Stanzvorrichtung (4) sowie eine Laserbearbeitungsvorrichtung (5) aufweist,
• wobei für einen Stanzwerkzeugteil (12) eines Stanzwerkzeugs (13) der Stanzvorrichtung (4) eine Position längs einer Arbeitshubachse (10) der Stanzvorrichtung (4) definiert und der Stanzwerkzeugteil (12) mittels einer stanzseitigen Stellvorrichtung (14) der Stanzvorrichtung (4) längs der Arbeitshubachse (10) der Stanzvorrichtung (4) in die definierte Position zugestellt wird und
• wobei für eine Laser-Zusatzeinheit (22) der außerdem eine Laserbearbeitungseinheit (23) umfassenden Laserbearbeitungsvorrichtung (5) eine Funktionsstellung definiert und die Laser-Zusatzeinheit (22) mittels einer Zusatzeinheit-Stellvorrichtung (25) mit einer Aktivierungsbewegung in die definierte Funktionsstellung zugestellt wird,
**dadurch gekennzeichnet, dass**
die Funktionsstellung der Laser-Zusatzeinheit (22) mittels der stanzseitigen Stellvorrichtung (14) definiert wird, indem die stanzseitige Stellvorrichtung (14) einen in der Richtung der Aktivierungsbewegung der Laser-Zusatzeinheit (22) wirksamen Anschlag (29) für die Laser-Zusatzeinheit (22) längs der Arbeitshubachse (10) der Stanzvorrichtung (4) in eine Anschlagposition zustellt, welche derart definiert ist, dass die an dem Anschlag (29) in der Richtung der Aktivierungsbewegung abgestützte Laser-Zusatzeinheit (22) die Funktionsstellung einnimmt.

## Claims

1. Machine tool for processing workpieces, in particular metal sheets (6), having a punching device (4) and having a laser processing device (5),
• wherein the punching device (4) comprises a punch-side positioning device (14) which moves a punching tool component (12) of a punching tool (13) into a defined position along an operating stroke axis (10) of the punching device (4),
• wherein the laser processing device (5) has a laser processing unit (23) and a laser accessory unit (22) and
• wherein an accessory unit positioning device (25) moves the laser accessory unit (22) with an activation movement into a defined operating position,
**characterised in that**
the punch-side positioning device (14) defines the operating position of the laser accessory unit (22) by the punch-side positioning device (14) moving a stop (29) for the laser accessory unit (22), which stop (29) is active in the direction of the activation movement of the laser accessory unit (22), along the operating stroke axis (10) of the punching device (4) into a stop position which is defined in such a manner that the laser accessory unit (22) which is supported on the stop (29) in the direction of the activation movement assumes the operating position.

2. Machine tool according to claim 1, **characterised in that** punch-side positioning device (14) jointly moves the stop (29) for the laser accessory unit (22) and the punching tool component (12) of the punching tool (13) along the operating stroke axis (10) of the punching device (4).

3. Machine tool according to any one of the preceding claims, **characterised in that** the punch-side positioning device (14) defines the operating position of the laser accessory unit (22) in a variable manner.

4. Machine tool according to claim 3, **characterised in that** the punch-side positioning device (14) defines the operating position of the laser accessory unit (22) in a variable manner by the punch-side positioning device (14) defining the stop position of the stop (29) for the laser accessory unit (22) in a variable manner.

5. Machine tool according to any one of the preceding claims, **characterised in that** the laser accessory unit (22) has a counter-stop (30) and, in the operating position, is supported in the direction of the activation movement by means of the counter-stop (30) on the stop (29) which has been positioned by means of the punch-side positioning device (14) along the operating stroke axis (10) of the punching device (4) and **in that** an adjustment device (31) is provided which adjusts the counter-stop (30) and the laser accessory unit (22) relative to each other in the direction of the activation movement.

6. Machine tool according to claim 5, **characterised in that** an adjustment screw is provided as the adjustment device (31).

7. Machine tool according to any one of the preceding claims, **characterised in that**
• there is provided a laser movement unit (26) on which the laser processing unit (23), the laser accessory unit (22) and the accessory unit positioning device (25) are supported, and
• **in that** there is provided a processing unit positioning device (28) which moves the laser processing unit (23) into a rest position remote from the workpiece and into an operating position close to the workpiece by the processing unit positioning device (28) moving the laser movement unit (26) into a position associated with the rest position of the laser processing unit (23) remote from the workpiece and into a position associated with the operating position of the laser processing unit (23) close to the workpiece, and
• **in that** the accessory unit positioning device (25) moves the laser accessory unit (22) with the activation movement relative to the laser movement unit (26) into the defined operating position.

8. Machine tool according to any one of the preceding claims, **characterised in that**, in addition to the punch-side positioning device (14), a punch drive (8) and, in addition to the punching tool component (12) which can be positioned by means of the punch-side positioning device (14), a punching processing unit of the punching tool (13) are provided, wherein the punch drive (8) moves the punching processing unit along the operating stroke axis (10) with an operating stroke which is directed towards a workpiece and with a return stroke which is directed counter to the operating stroke and **in that** the punch drive (8) moving the punching processing unit with a return stroke moves the laser accessory unit (22), which has been moved into the operating position by means of the accessory unit positioning device (25), from the operating position with a deactivation movement directed counter to the activation movement into a non-operational position.

9. Machine tool according to claim 8, **characterised in that** the punch drive (8) has a tappet (9) and the punching processing unit is provided on the tappet (9) of the punch drive (8) and can be moved by means of a retraction movement of the tappet (9) with the return stroke and **in that** the tappet (9) of the punch drive (8) has a carrier (21) by means of which the tappet (9) which is moved with the retraction movement carries the stop (29) which has been moved into the stop position by means of the punch-side positioning device (14) and thereby moves the laser accessory unit (22), which is supported on the stop (29) in the direction of the activation movement, from the operating position with the deactivation movement into the non-operational position.

10. Machine tool according to any one of the preceding claims, **characterised in that** the punch-side positioning device (14) moves a punching tool component (12) in the form of a stripper of the punching tool (13) along the operating stroke axis (10).

11. Machine tool according to any one of the preceding claims, **characterised in that** a piston/cylinder unit is provided as the accessory unit positioning device (25) and/or as the punch-side positioning device (14) and/or as the processing unit positioning device (28).

12. Machine tool according to any one of the preceding claims, **characterised in that** a device for shielding a laser beam which is directed from the laser processing unit (23) onto a workpiece which is intended to be processed and/or a workpiece holding-down member is provided as the laser accessory unit (22).

13. Method for processing workpieces, in particular metal sheets (6), by means of a machine tool (1) which has a punching device (4) and a laser processing device (5),
• wherein for a punching tool component (12) of a punching tool (13) of the punching device (4) a position along an operating stroke axis (10) of the punching device (4) is defined and the punching tool component (12) is moved by means of a punch-side positioning device (14) of the punching device (4) along the operating stroke axis (10) of the punching device (4) in the defined position, and
• wherein for a laser accessory unit (22) of the laser processing device (5), which further comprises a laser processing unit (23), an operating position is defined and the laser accessory unit (22) is moved by means of an accessory unit positioning device (25) with an activation movement into the defined operating position,
**characterised in that**
the operating position of the laser accessory unit (22) is defined by means of the punch-side positioning device (14) by the punch-side positioning device (14) moving a stop (29) for the laser accessory unit (22), which stop (29) is active in the direction of the activation movement of the laser accessory unit (22), along the operating stroke axis (10) of the punching device (4) into a stop position which is defined in such a manner that the laser accessory unit (22) which is supported on the stop (29) in the direction of the activation movement assumes the operating position.

## Revendications

1. Machine-outil d'usinage de pièces, en particulier de tôles (6), équipée d'un dispositif de poinçonnage (4) et d'un dispositif d'usinage laser (5),
• où le dispositif de poinçonnage (4) comprend un dispositif de réglage côté poinçonnage (14), lequel déplace une partie d'outil de poinçonnage (12) d'un outil de poinçonnage (13) le long d'un axe de course d'usinage (10) du dispositif de poinçonnage (4) dans une position définie,
• où le dispositif d'usinage laser (5) présente une unité d'usinage laser (23) et une unité auxiliaire de laser (22) et
• où un dispositif de réglage d'unité auxiliaire (25) déplace l'unité auxiliaire de laser (22) avec un mouvement d'activation dans une position de fonctionnement définie,
**caractérisée en ce que**
le dispositif de réglage côté poinçonnage (14) définit la position de fonctionnement de l'unité auxiliaire de laser (22), où le dispositif de réglage côté poinçonnage (14) déplace une butée (29) destinée à l'unité auxiliaire de laser (22) et lui servant de butée dans la direction du mouvement d'activation de l'unité auxiliaire de laser (22), le long de l'axe de course d'usinage (10) du dispositif de poinçonnage (4) dans une position de butée, laquelle est définie de telle sorte que l'unité auxiliaire de laser (22) en appui contre la butée (29) dans la direction du mouvement d'activation adopte la position de fonctionnement.

2. Machine-outil selon la revendication 1, **caractérisée en ce que** le dispositif de réglage côté poinçonnage (14) déplace la butée (29) destinée à l'unité auxiliaire de laser (22) et la partie d'outil de poinçonnage (12) de l'outil de poinçonnage (13) de manière conjointe le long de l'axe de course d'usinage (10) du dispositif de poinçonnage (4).

3. Machine-outil selon l'une des revendications précédentes, **caractérisée en ce que** le dispositif de réglage côté poinçonnage (14) définit la position de fonctionnement de l'unité auxiliaire de laser (22) de manière variable.

4. Machine-outil selon la revendication 3, **caractérisée en ce que** le dispositif de réglage côté poinçonnage (14) définit la position de fonctionnement de l'unité auxiliaire de laser (22) de manière variable, où le dispositif de réglage côté poinçonnage (14) définit la position de butée de la butée (29) destinée à l'unité auxiliaire de laser (22) de manière variable.

5. Machine-outil selon l'une des revendications précédentes, **caractérisée en ce que** l'unité auxiliaire de laser (22) présente une contre-butée (30) et, dans la position de fonctionnement et au moyen de la contre-butée (30), prend appui, dans la direction du mouvement d'activation, sur la butée (29) déplacée au moyen du dispositif de réglage côté poinçonnage (14) le long de l'axe de course d'usinage (10) du dispositif de poinçonnage (4) et **en ce qu'**un dispositif d'ajustement (31) est prévu, lequel ajuste la contre-butée (30) et l'unité auxiliaire de laser (22) dans la direction du mouvement d'activation l'une par rapport à l'autre.

6. Machine-outil selon la revendication 5, **caractérisée en ce qu'** une vis de réglage est prévue comme dispositif d'ajustement (31),.

7. Machine-outil selon l'une des revendications précédentes, **caractérisée en ce que**
• une unité de déplacement de laser (26) est prévue, sur laquelle l'unité d'usinage laser (23), l'unité auxiliaire de laser (22) et le dispositif de réglage d'unité auxiliaire (25) sont agencés et
• un dispositif de réglage d'unité d'usinage (28) est prévu, lequel déplace l'unité d'usinage laser (23) dans une position de repos distante de la pièce et dans une position d'usinage proche de la pièce, où le dispositif de réglage d'unité d'usinage (28) déplace l'unité de déplacement de laser (26) dans une position assignée à la position de repos distante de la pièce de l'unité d'usinage laser (23) et dans une position assignée à la position d'usinage proche de la pièce de l'unité d'usinage laser (23) et
• le dispositif de réglage d'unité auxiliaire (25) déplace l'unité auxiliaire de laser (22) par rapport à l'unité de déplacement de laser (26) avec le mouvement d'activation dans la position de fonctionnement définie.

8. Machine-outil selon l'une des revendications précédentes, **caractérisée en ce qu'**en plus du dispositif de réglage côté poinçonnage (14), un entraînement de poinçonnage (8) et en plus de la partie d'outil de poinçonnage (12) pouvant être déplacée au moyen du dispositif de réglage du côté poinçonnage (14), une unité d'usinage par poinçonnage de l'outil de poinçonnage (13) sont prévus, où l'entraînement de poinçonnage (8) déplace l'unité d'usinage par poinçonnage le long de l'axe de course d'usinage (10) avec une course d'usinage dirigée vers une pièce et avec une course de retour dirigée dans le sens inverse de la course d'usinage, et **en ce que** l'entraînement de poinçonnage (8) déplaçant l'unité d'usinage par poinçonnage avec une course de retour déplace l'unité auxiliaire de laser (22) déplacée dans la position de fonctionnement au moyen du dispositif de réglage d'unité auxiliaire (25) pour lui faire quitter la position de fonctionnement avec un mouvement de désactivation dirigé dans le sens inverse du mouvement d'activation et la placer dans une position de non-fonctionnement.

9. Machine-outil selon la revendication 8, **caractérisée en ce que** l'entraînement de poinçonnage (8) présente un poussoir (9) et l'unité d'usinage par poinçonnage est prévue au poussoir (9) de l'entraînement de poinçonnage (8) et peut être déplacée via un mouvement de retour du poussoir (9) avec la course de retour et **en ce que** le poussoir (9) de l'entraînement de poinçonnage (8) présente un élément d'entraînement (21) au moyen duquel le poussoir (9) déplacé avec le mouvement de retour entraîne la butée (29) déplacée dans la position de butée au moyen du dispositif de réglage côté poinçonnage (14) et ainsi l'unité auxiliaire de laser (22) en appui contre la butée (29) dans la direction du mouvement d'activation est déplacée par le mouvement de désactivation de la position de fonctionnement à la position de non-fonctionnement.

10. Machine-outil selon l'une des revendications précédentes, **caractérisée en ce que** le dispositif de réglage côté poinçonnage (14) déplace comme partie d'outil de poinçonnage (12) un dévêtisseur de l'outil de poinçonnage (13) le long de l'axe de course d'usinage (10).

11. Machine-outil selon l'une des revendications précédentes, **caractérisée en ce que**, comme dispositif de réglage d'unité auxiliaire (25) et/ou comme dispositif de réglage côté poinçonnage (14) et/ou comme dispositif de réglage d'unité d'usinage (28), une unité de piston/cylindre est prévue.

12. Machine-outil selon l'une des revendications précédentes, **caractérisée en ce que**, comme unité auxiliaire de laser (22), un dispositif assurant une protection vis-à-vis d'un faisceau laser orienté de l'unité d'usinage laser (23) vers une pièce à usiner et/ou un dispositif de retenue de pièce est/sont prévu(s).

13. Procédé d'usinage de pièces, en particulier de tôles (6), au moyen d'une machine-outil (1), qui présente un dispositif de poinçonnage (4) et un dispositif d'usinage laser (5),
• où pour une partie d'outil de poinçonnage (12) d'un outil de poinçonnage (13) du dispositif de poinçonnage (4), une position le long d'un axe de course d'usinage (10) du dispositif de poinçonnage (4) est définie et la partie d'outil de poinçonnage (12) est déplacée au moyen d'un dispositif de réglage côté poinçonnage (14) du dispositif de poinçonnage (4) le long de l'axe de course d'usinage (10) du dispositif de poinçonnage (4) à la position définie et
• où pour une unité auxiliaire de laser (22) du dispositif d'usinage laser (5) comprenant en outre une unité d'usinage laser (23), une position de fonctionnement est définie et l'unité auxiliaire de laser (22) est déplacée au moyen d'un dispositif de réglage d'unité auxiliaire (25) avec un mouvement d'activation à la position de fonctionnement définie,
**caractérisé en ce que**
la position de fonctionnement de l'unité auxiliaire de laser (22) est définie au moyen du dispositif de réglage côté poinçonnage (14), où le dispositif de réglage côté poinçonnage (14) déplace une butée (29) destinée à l'unité auxiliaire de laser (22) et lui servant de butée dans la direction du mouvement d'activation de l'unité auxiliaire de laser (22), le long de l'axe de course d'usinage (10) du dispositif de poinçonnage (4) dans une position de butée, laquelle est définie de telle sorte que l'unité auxiliaire de laser (22) en appui contre la butée (29) dans la direction du mouvement d'activation adopte la position de fonctionnement.
